# FASCICULE DE BREVET EUROPEEN

(11) **EP 0 762 605 B1**
(45) Date de publication et mention de la délivrance du brevet: **13.12.2000**
(21) Numéro de dépôt: 96401879.0
(22) Date de dépôt: 02.09.1996
(51) Int. Cl.: H02K 3/50

(54) **Organe de raccordement électrique pour moteur électrique et moteur électrique équipé de cet organe**
Elektrisches Verbindungselement für Elektromotor und mit diesem ausgerüsteter Elektromotor
Electrical connection element for electric motor and electric motor equipped with it

(30) Priorité: 04.09.1995 FR 9510350
(43) Date de publication de la demande: 12.03.1997
(73) Titulaire: ECIA INDUSTRIE, 92100 Boulogne (FR)
(72) Inventeur: Darceot, Michel, 25310 Herimoncourt (FR)
(74) Mandataire: Moncheny, Michel

(56) Documents cités:
- EP-A- 0 635 926
- DE-U- 29 504 636
- FR-A- 2 632 790

## Description

La présente invention concerne un organe de raccordement électrique pour moteur électrique ainsi qu'un moteur électrique muni de cet organe.

Elle s'applique en particulier aux moteurs électriques à commutation électronique utilisés notamment dans les groupes motoventilateurs équipant les véhicules automobiles.

On connaît déjà dans l'état de la technique des mo-teurs électriques à courant continu munis d'un induit bobiné alimenté électriquement par des moyens à balais et collecteur. Ce type de moteur a été perfectionné en remplaçant les moyens à balais et collecteur par un circuit électronique d'alimentation électrique et de commutation des bobines d'induit.

Les extrémités des fils des bobines d'induit d'un moteur à commutation électronique sont généralement reliées au circuit électronique par soudage. Les opérations de soudure doivent être effectuées manuellement car elles sont difficiles à automatiser.

L'invention a pour but de faciliter la fabrication d'un moteur électrique à commutation électronique, notamment en rendant réalisables par des moyens automatiques les opérations de connexion des bobines de l'induit avec le circuit électronique.

A cet effet, l'invention a pour objet un organe de raccordement électrique pour moteur électrique, ce moteur comprenant un induit muni d'une armature portant des bobines conductrices, et un circuit électronique d'alimentation électrique et de commutation des bobines, caractérisé en ce qu'il comprend une bague conductrice comportant une première face munie d'au moins deux pions axiaux d'accrochage de l'armature, une seconde face munie d'au moins deux broches axiales conductrices de connexion avec le circuit électronique, et au moins deux crochets périphériques conducteurs de connexion des bobines avec la bague, la bague conductrice étant sectionnable en secteurs électriquement isolés.

Suivant d'autres caractéristiques de cet organe de raccordement électrique :
- les pions d'accrochage, les broches et les crochets de connexion sont venus de matière avec la bague ;
- les crochets de connexion sont formés par des languettes recourbées de crevés ménagés dans les pions d'accrochage ;
- l'organe comprend des moyens détrompeurs à évidement et saillie axiaux complémentaires, pour le positionnement angulaire correct des pions d'accrochage par rapport à l'armature ;
- l'organe comprend des moyens détrompeurs par espacement angulaire irrégulier des broches de connexion pour la connexion correcte de ces broches avec le circuit électronique.

L'invention a également pour objet un moteur électrique du type comprenant un induit fixe muni d'une armature de forme générale cylindrique portant des bobines conductrices, et un support portant un circuit électronique d'alimentation et de commutation des bobines, caractérisé en ce qu'il est muni d'un organe de raccordement électrique, de forme générale cylindrique, coaxial à l'armature, et comprenant une bague conductrice comportant une première face munie d'au moins deux pions axiaux d'accrochage sur l'armature emboîtables dans des trous complémentaires ménagés dans cette armature, une seconde face munie d'au moins deux broches axiales conductrices de connexion avec le circuit électronique emboîtables dans des perçages ménagés à travers le support du circuit, et au moins deux crochets périphériques conducteurs de connexion des bobines avec la bague, cette bague étant sectionnée en secteurs électriquement isolés.

Suivant d'autres caractéristiques de ce moteur électrique :
- les pions d'accrochage, les broches et les crochets de connexion sont venus de matière avec la bague, les crochets étant formés par des languettes recourbées de crevés ménagés dans les pions d'accrochage ;
- les trous d'accrochage des pions sont ménagés dans une joue d'isolation électrique recouvrant une face de l'armature ;
- le moteur comprend des moyens détrompeurs à évidement et saillie axiaux complémentaires, pour le positionnement angulaire correct des pions d'accrochage par rapport à l'armature ;
- les évidement et saillie axiaux sont ménagés dans la bague et la joue d'isolation ;
- le moteur comprend des moyens détrompeurs par espacement angulaire irrégulier des broches de connexion, pour la connexion correcte des broches de connexion avec le circuit électronique, à espacement angulaire de ces broches dissymétrique.

L'invention sera mieux comprise à la lecture de la description qui va suivre donnée uniquement à titre d'exemple et faite en se référant aux dessins annexés dans lesquels :
- la figure 1 et une vue en perspective en coupe axiale d'un moteur électrique selon l'invention ;
- la figure 2 est une vue en perspective éclatée de certains éléments du moteur représenté à la figure 1;
- la figure 3 est une vue en perspective, à échelle agrandie, d'un organe de raccordement électrique du moteur selon l'invention;
- la figure 4 est une vue de face schématique de l'induit bobiné du moteur selon l'invention;
- la figure 5 est un schéma d'une phase de l'induit;
- la figure 6 est un schéma développé des bobines de l'induit;
- les figures 7 à 9 sont des vues similaires à la figure 4 montrant différentes étapes du bobinage de l'induit.

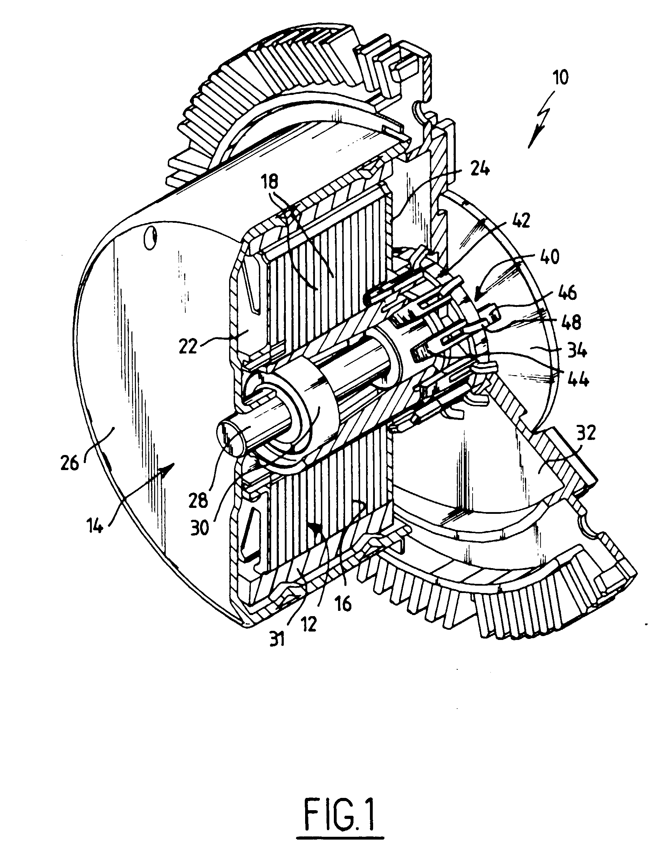

On a représenté sur la figure 1 un moteur électrique à courant continu selon l'invention, désigné par la référence générale 10.

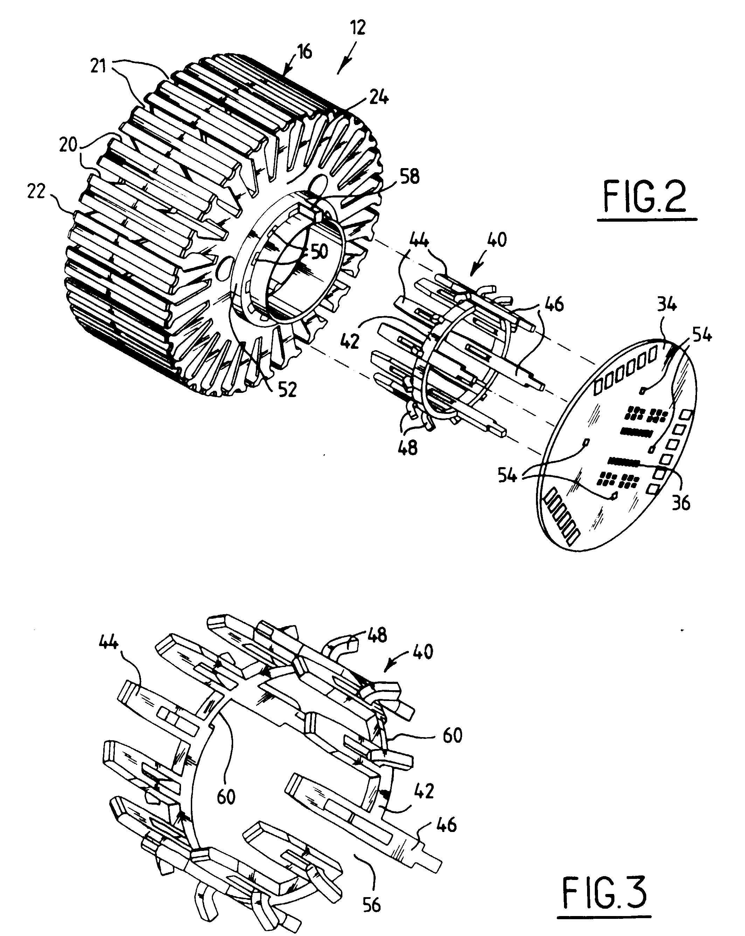

Ce moteur 10 comporte un induit bobiné fixe 12 et un inducteur rotatif 14. Pour des raisons de clarté, les bobines conductrices de l'induit 12 n'ont pas été représentées sur les figures 1 et 2.

Le bobinage de l'induit est du type carré triphasé et sera décrit ultérieurement.

L'induit 12 comporte une armature 16 de forme générale cylindrique comprenant, de façon classique, un empilage de tôles 18 délimitant des encoches 20 d'accrochage des bobines clairement représentées sur la figure 2. Les encoches 20 sont séparées par des dents 21.

L'armature 16 comporte également des joues d'isolation électrique 22, 24, recouvrant ces faces.

L'inducteur 14 comporte une armature rotative 26 en forme de bol dans laquelle est logé l'induit 12.

L'armature 26 d'inducteur est reliée de façon connue en soi à un arbre rotatif 28 porté par des moyens de roulement 30 intercalés entre cet arbre 28 et l'armature 16 d'induit.

Des aimants permanents 31 sont accrochés de façon connue en soi sur le contour interne de l'armature 26 d'inducteur.

Le côté ouvert de l'armature 26 d'inducteur est obturé par un flasque fixe 32 portant une plaque 34 formant support pour un circuit électronique 36 d'alimentation électrique et de commutation des bobines de l'induit 12.

Le circuit électronique 36 est raccordé électriquement aux bobines de l'induit 12 par un organe 40 de forme générale cylindrique qui est montré en détail aux figures 2 et 3. L'organe 40 est coaxial à l'armature 16.

L'organe de raccordement électrique 40 comprend une bague conductrice 42 comportant une première face munie d'au moins deux pions axiaux 44 d'accrochage sur l'armature 16 d'induit et une seconde face munie d'au moins deux broches axiales conductrices 46 de connexion avec le circuit 36 de commutation.

La bague conductrice 42 comporte également au moins deux crochets périphériques conducteurs 48 de connexion des bobines de l'induit avec cette bague.

De préférence, les pions d'accrochage 44, les broches 46 et les crochets 48 de connexion sont venus de matière avec la bague 42, les crochets 48 étant formés par des languettes recourbées de crevés ménagés dans les pions d'accrochage 44.

Dans l'exemple décrit, l'organe de raccordement électrique 40 comprend douze pions d'accrochage 44, autant de crochets 48 et quatre broches de connexion 46.

Les pions d'accrochage 44 sont emboîtés dans des trous 50 de forme complémentaire ménagés dans une couronne d'accrochage 52 venue de matière avec une joue 24 d'isolation électrique.

Les broches de connexion 46 sont emboîtées dans des perçages 54 ménagés à travers la plaque 34 de support du circuit électronique.

Les extrémités des conducteurs formant les entrées et les sorties de courant des bobines de l'induit 12 sont reliées aux crochets de connexion 48 par soudage.

Les broches de connexion 46 s'étendent dans les perçages 54, à travers le flasque 32 et la plaque 34, leurs extrémités libres faisant saillie sur la face de cette plaque opposée à l'induit 12 et étant reliées à des conducteurs du circuit électronique 36 par soudage.

Si nécessaire, les broches de connexion 46 sont revêtues de manchons d'isolation empêchant tout contact électrique entre ces broches et le flasque 32.

Le contour de la bague 42 est interrompu de manière à délimiter un évidement axial 56 destiné à coopérer avec une saillie axiale 58 de forme complémentaire, ménagée sur la couronne 52. L'évidement 56 et la saillie 58 forment des moyens détrompeurs pour le positionnement angulaire correct des pions 44 par rapport à l'armature 16.

L'organe de raccordement électrique 40 comporte également des moyens détrompeurs par espacement angulaire irrégulier des broches de connexion 46 et des perçages 54, pour la connexion correcte de ces broches 46 avec le circuit électronique 36.

Les moyens détrompeurs que l'on vient de décrire permettent donc d'assurer un positionnement relatif correct de l'armature 16 d'induit, de l'organe de raccordement électrique 40 et de la plaque 34 de support de circuit électronique.

La bague 42 comporte des zones amincies 60, de préférence suivant sa direction axiale comme cela est représenté sur les figures, destinées au sectionnement de cette bague en différents secteurs électriquement isolés.

Lors de la fabrication de l'induit 12, on emboîte l'organe de raccordement électrique 40 dans l'armature 16, puis on enroule les bobines dans les encoches 20 avec des moyens classiques utilisés habituellement pour la fabrication d'induits à collecteur et balais.

Après soudage des extrémités des conducteurs des bobines sur les crochets de connexion 48, on sectionne la bague 42 à différents endroits de manière à diviser cette bague en secteurs électriquement isolés et à réaliser les couplages de bobines souhaités.

On notera que sur les figures 1 à 3 la bague 42 est représentée d'un seul tenant, avant sectionnement en différents secteurs isolés.

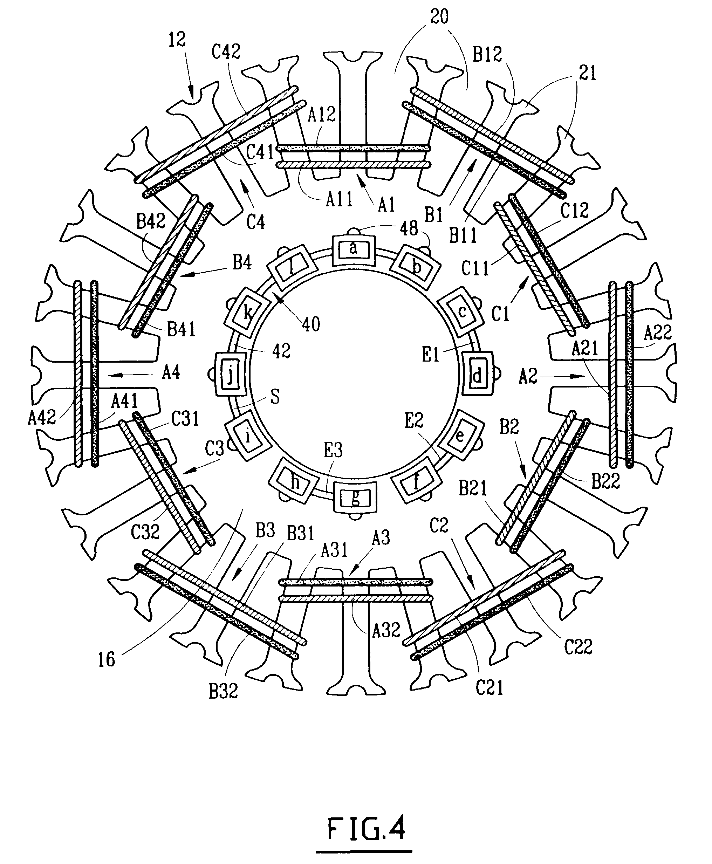

On décrira ci-dessous le bobinage de l'induit 12 en se référant aux figures 4 à 9.

L'induit 12 comprend vingt quatre encoches 20 et autant de dents 21. Comme précisé précédemment, l'induit 12 est du type carré triphasé. Il comporte douze bobines A1 à A4, B1 à B4, C1 à C3 réparties en trois phases. Les bobines d'une même phase sont alimentées électriquement simultanément. Chaque phase comporte deux paires de bobines diamétralement opposées. Ces paires sont disposées à angle droit l'une par rapport à l'autre.

Les bobines sont réparties sur deux couches inférieure et supérieure, les bobines inférieures A1, A3, C1, C3, B2, B4 alternant avec les bobines supérieures B1, B3, A2, A4, C2, C4.

Chaque phase comporte une paire de bobines diamétralement opposées disposée dans la couche inférieure et une paire de bobines diamétralement opposées disposée dans la couche supérieure.

Chaque bobine A1 à A4, B1 à B4, C1 à C4 comporte deux enroulements inférieur A11, B11, C11, A21, B21, C21, A31, B31, C31, A41, B41, C41 et supérieur A12, B12, C12, A22, B22, C22, A32, B32, C32, A42, B42, C42.

Les enroulements inférieur et supérieur d'une même bobine sont schématisés sur les figures 4 et 7 à 9 par une seule spire.

On notera que les bobines sont enroulées sur l'armature 16 de manière que chacune entoure trois dents 21. Une bobine de la couche supérieure est intercalée entre deux bobines de la couche inférieure de manière à recouvrir partiellement ces deux dernières bobines. Ainsi, chaque bobine de la couche inférieure entoure une dent qui est commune avec la bobine de la couche supérieure immédiatement voisine.

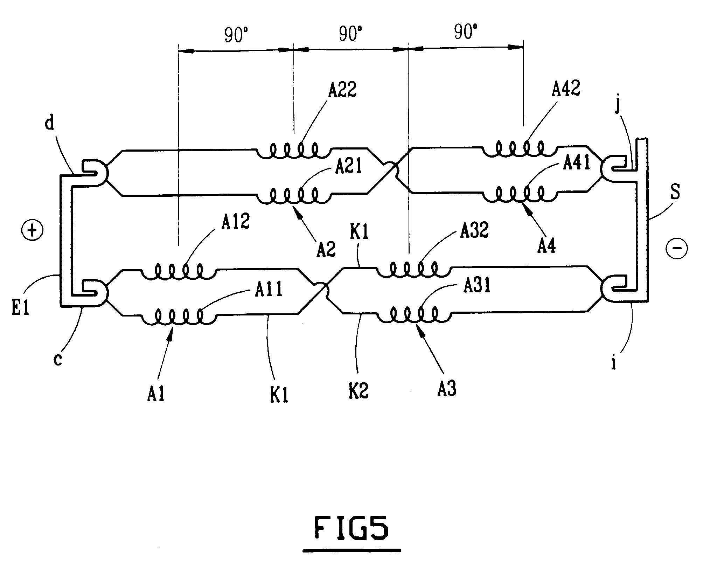

On a représenté sur la figure 5 les bobines d'une phase de façon schématique. Sur cette figure, on voit que chaque bobine comporte deux conducteurs bobinés K1, K2 ininterrompus reliés électriquement en parallèle. Chaque conducteur K1, K2 forme l'enroulement inférieur A11, A21, A31, A41 d'une bobine d'une paire et l'enroulement supérieur A32, A42, A12, A22 de cette paire, de manière que ces enroulements inférieur et supérieur soient reliés électriquement en série.

Chaque paire de bobines diamétralement opposées comporte ainsi une bobine A1, A2 d'entrée de courant dans la paire et une bobine A3, A4 de sortie de courant dans la paire.

L'agencement des autres phases de l'induit est analogue à l'agencement de la phase représentée sur la figure 5.

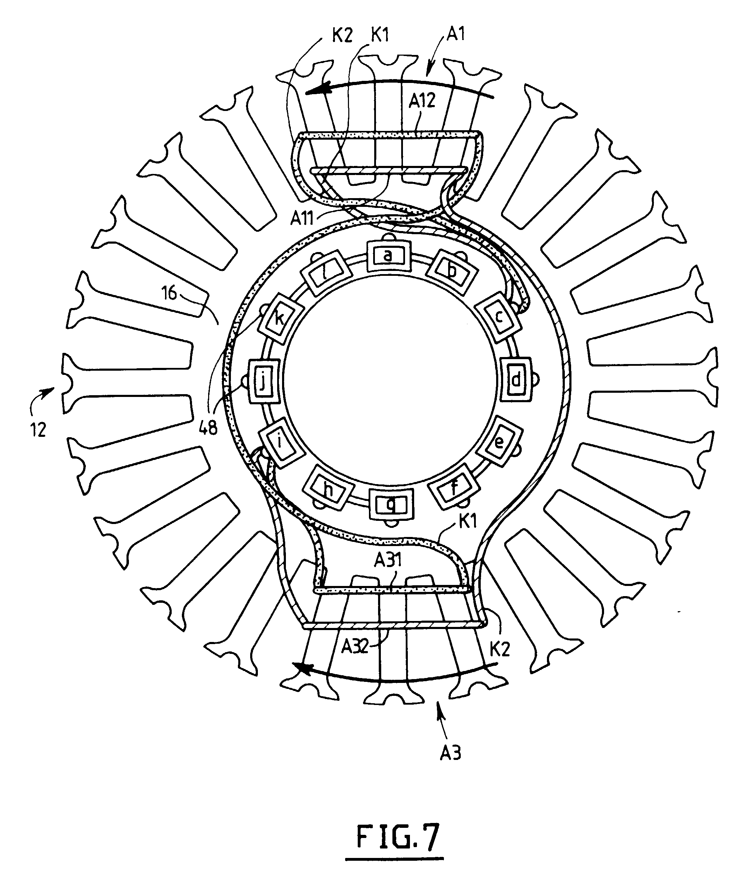

Le bobinage de deux bobines diamétralement opposées est effectué au moyen d'une bobineuse classique à deux bras, selon le procédé qui sera décrit ci-dessous en se référant à la figure 7. Sur cette figure on a représenté uniquement une paire inférieure de bobines diamétralement opposées A1, A3.

Au cours d'une première étape, les bras réalisent simultanément les deux enroulements inférieurs A11, A31 des bobines en enroulant les deux conducteurs correspondants K1, K2 suivant des sens symétriques par rapport au plan diamétral de l'armature 16 perpendiculaire à l'alignement des bobines A1, A2.

Les enroulements inférieurs étant achevés, on fait tourner l'armature 16 autour de son axe d'un demi-tour, sans modifier la position des bras de la bobineuse.

Dans une seconde étape, les bras de la bobineuse réalisent simultanément les deux enroulements supérieurs A12, A32 des bobines en enroulant les deux conducteurs correspondants K1, K2 dans les mêmes sens qu'au cours de la première étape.

Les sens d'enroulement des conducteurs K1, K2 par les bras de la bobineuse sont indiqués par des flèches sur la figure 7.

Le bobinage complet de l'induit 12 est effectué de la façon suivante.

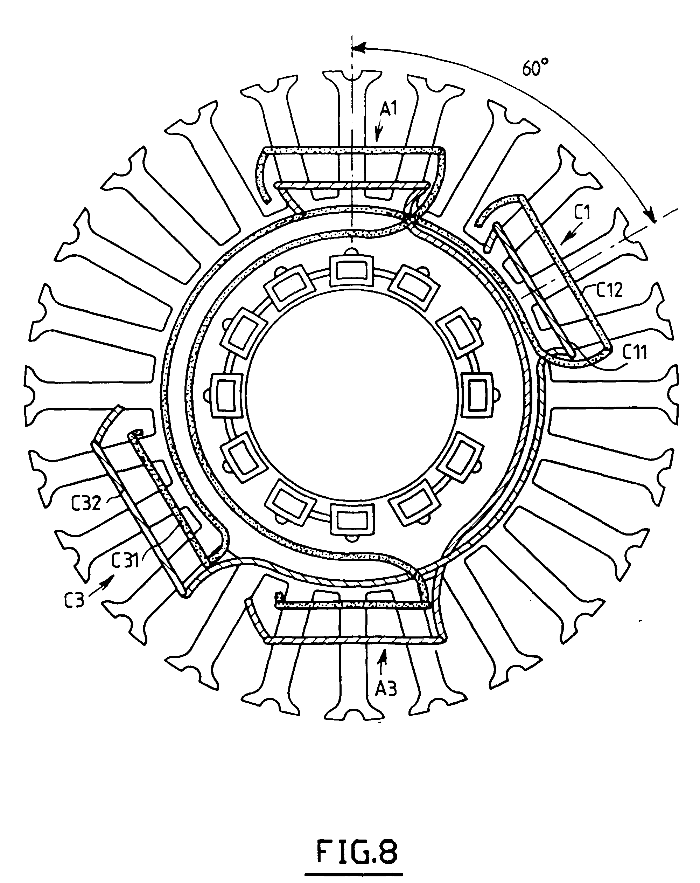

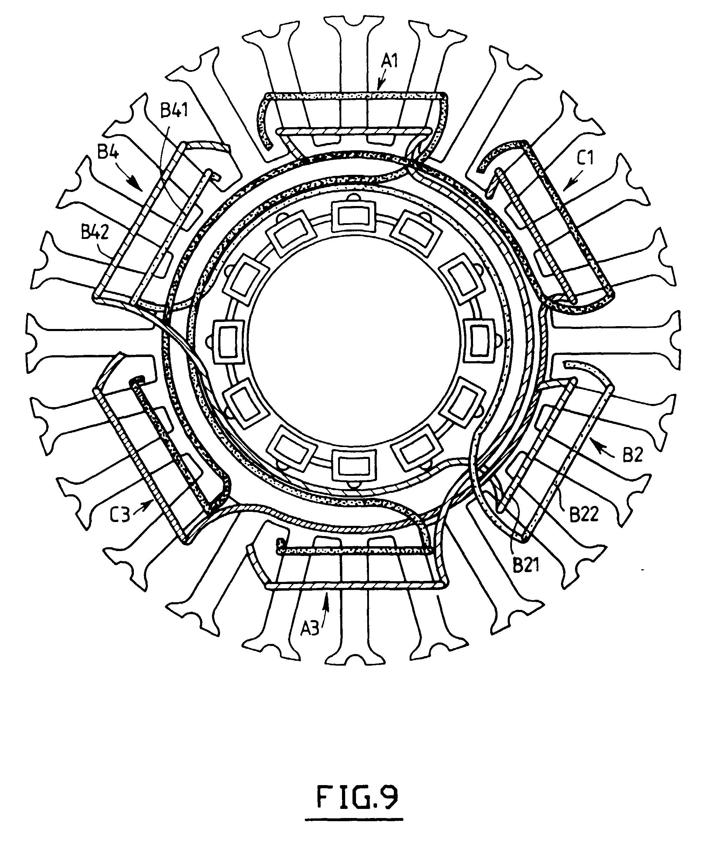

Dans un premier temps, on réalise toutes les bobines de la couche inférieure. Pour cela, on réalise la paire inférieure de bobines d'une première phase, comme décrit ci-dessus et illustré sur la figure 7, puis on réalise la paire inférieure de bobines d'une seconde phase, cette paire étant décalée de 60° par rapport à la précédente, comme illustré sur la figure 8, et enfin on réalise la paire inférieure de bobines de la troisième phase, comme illustré sur la figure 9.

Dans un deuxième temps, on réalise les bobines de la couche supérieure, de façon analogue à celles de la couche inférieure, de manière à obtenir l'induit bobiné représenté à la figure 4.

Toutes les paires de bobines diamétralement opposées sont réalisées selon le même procédé décrit précédemment et au moyen de la même bobineuse à deux bras.

L'utilisation d'une bobineuse à deux bras permet de réaliser le bobinage de l'induit de façon automatique et rapide.

Le moteur selon l'invention comporte autant de crochets 48 que de bobines d'induit, à savoir douze. Ces crochets 48 sont repérés par des références alphabétiques a à 1 et sont répartis angulairement au droit des bobines de l'induit.

On voit notamment sur la figure 4 que la bague 42 est divisée en quatre secteurs électriquement isolés. La bague 42 comporte un secteur E1 à E3 d'entrée de courant par phase sur lequel sont reliées les extrémités des conducteurs K1, K2 formant les entrées de courant des deux paires de bobines de cette phase, et un secteur de sortie S sur lequel sont reliées toutes les extrémités des conducteurs K1, K2 formant les sorties de courant de toutes les paires de bobines. Ainsi, les deux paires de bobines d'une même phase sont reliées électriquement en parallèle.

On notera que la bague 42 comporte autant de broches de connexion 44 que de secteurs E1 à E3, S.

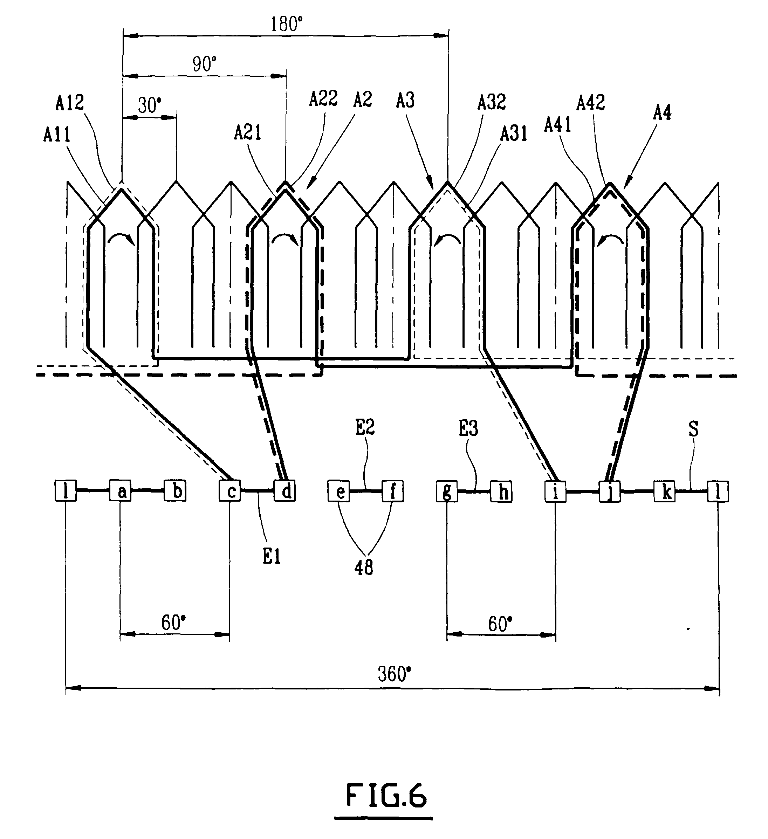

On se référera maintenant à la figure 6 qui illustre clairement le raccordement électrique des bobines d'une phase aux crochets 48.

Sur cette figure, on voit que l'entrée de courant de la paire inférieure (appartenant à la couche inférieure) de bobines A1, A3 d'une phase est reliée à un crochet d'entrée de courant c décalé de 60°, dans le sens horaire, par rapport à la bobine d'entrée de courant A1 de cette paire. De même, la sortie de courant de la paire inférieure de bobines A1, A3 d'une phase est reliée à un crochet de sortie de courant i décalé de 60°, dans le sens horaire, par rapport à la bobine de sortie de courant A3 de cette paire.

Par contre, l'entrée de courant de la paire supérieure (appartenant à la couche supérieure) de bobines A2, A4 d'une phase est reliée à un crochet d'entrée de courant d disposé au droit de la bobine d'entrée de courant A2 de cette paire. De même la sortie de courant de la paire supérieure de bobines A2, A4 d'une phase est reliée à un crochet de sortie de courant j disposé au droit de la bobine de sortie de courant A4 de cette paire.

On obtient ainsi, d'une part, que les deux crochets d'entrée de courant reliés aux deux paires de bobines d'une même phase soient juxtaposés et appartiennent à un même secteur d'entrée de courant E1 à E3, et d'autre part, que tous les crochets de sortie de courant soient juxtaposés et appartiennent au même secteur de sortie de courant S.

On notera que pour des raisons de clarté, les connexions de toutes les bobines de l'induit ne sont pas représentées sur la figure 6. Sur la figure 5, on a représenté les crochets d'entrée de courant c, d d'une phase, correspondant à une polarisation positive du courant (+), et les crochets de sortie de courant i, j de cette phase, correspondant à une polarisation négative du courant (-).

L'invention comporte de nombreux avantages.

En particulier, l'organe de raccordement électrique selon l'invention permet de réaliser le bobinage de l'induit avec une bobineuse classique utilisée habituellement pour la fabrication d'induits de moteurs à courant continu à collecteur et balais.

Les extrémités des fils des bobines de l'induit peuvent être facilement soudées sur les crochets de connexion 48 à l'aide de moyens automatiques. De même, le raccordement électrique du circuit électronique 36 avec des broches de connexion 46 est facile à réaliser avec des moyens automatiques. Ainsi, l'ensemble de l'induit 12 peut être fabriqué en automatique.

L'organe de raccordement électrique 40 selon l'invention permet de coupler les bobines de l'induit selon toute configuration souhaitée, ce qui permet de simplifier le circuit électronique 36 en supprimant de ce dernier les moyens classiques de couplage des bobines.

Les moyens détrompeurs de l'organe de raccordement électrique permettent d'éviter les erreurs de connexion électrique entre les bobines de l'induit et le circuit électronique de commutation.

## Revendications

1. Organe de raccordement électrique pour moteur électrique, ce moteur comprenant un induit (12) muni d'une armature (16) portant des bobines conductrices, et un circuit électronique (36) d'alimentation électrique et de commutation des bobines, caractérisé en ce qu'il comprend une bague conductrice (42) comportant une première face munie d'au moins deux pions axiaux (44) d'accrochage de l'armature, une seconde face munie d'au moins deux broches axiales conductrices (46) de connexion avec le circuit électronique, et au moins deux crochets périphériques conducteurs (48) de connexion des bobines avec la bague (42), la bague conductrice (42) étant sectionnable en secteurs électriquement isolés.

2. Organe de raccordement électrique selon la revendication 1, caractérisé en ce que les pions d'accrochage (44), les broches (46) et les crochets (48) de connexion sont venus de matière avec la bague (42).

3. Organe de raccordement électrique selon la revendication 1, caractérisé en ce que les crochets de connexion (48) sont formés par des languettes recourbées de crevés ménagés dans les pions d'accrochage (44).

4. Organe de raccordement électrique selon l'une quelconque des revendications précédentes, caractérisé en ce qu'il comprend des moyens détrompeurs à évidement (56) et saillie (58) axiaux complémentaires, pour le positionnement angulaire correct des pions d'accrochage (44) par rapport à l'armature (16).

5. Organe de raccordement électrique selon l'une quelconque des revendications précédentes, caractérisé en ce qu'il comprend des moyens détrompeurs par espacement angulaire irrégulier des broches de connexion (46) pour la connexion correcte de ces broches avec le circuit électronique (36).

6. Organe de raccordement électrique selon l'une quelconque des revendications précédentes, caractérisé en ce que la bague (42) comporte des zones amincies, de préférence axialement, de sectionnement de cette bague.

7. Moteur électrique du type comprenant un induit fixe (12) muni d'une armature (16) de forme générale cylindrique portant des bobines conductrices, et un sup-port (34) portant un circuit électronique (36) d'alimentation et de commutation des bobines, caractérisé en ce qu'il est muni d'un organe de raccordement électrique (40), de forme générale cylindrique, coaxial à l'armature (16), et comprenant une bague conductrice (42) comportant une première face munie d'au moins deux pions axiaux (44) d'accrochage sur l'armature (16) emboîtables dans des trous complémentaires (50) ménagés dans cette armature, une seconde face munie d'au moins deux broches axiales conductrices (46) de connexion avec le circuit électronique (36) emboîtables dans des perçages (54) ménagés à travers le support (34) du circuit, et au moins deux crochets périphériques conducteurs (48) de connexion des bobines avec la bague (42), cette bague étant sectionnée en secteurs électriquement isolés.

8. Moteur électrique selon la revendication 7, caractérisé en ce que les pions d'accrochage (44), les broches (46) et les crochets (48) de connexion sont venus de matière avec la bague (42), les crochets (48) étant formés par des languettes recourbées de crevés ménagés dans les pions d'accrochage (44).

9. Moteur électrique selon la revendication 7 ou 8, caractérisé en ce que les trous (50) d'accrochage des pions (44) sont ménagés dans une joue (24) d'isolation électrique recouvrant une face de l'armature (16).

10. Moteur électrique selon l'une quelconque des revendications 7 à 9, caractérisé en ce qu'il comprend des moyens détrompeurs à évidement (56) et saillie (58) axiaux complémentaires, pour le positionnement angulaire correct des pions d'accrochage (44) par rapport à l'armature (16).

11. Moteur électrique selon les revendications 9 et 10 prises ensemble, caractérisé en ce que les évidement (56) et saillie (58) axiaux sont ménagés dans la bague (42) et la joue d'isolation (24).

12. Moteur électrique selon l'une quelconque des revendications 7 à 11, caractérisé en ce qu'il comprend des moyens détrompeurs par espacement angulaire irrégulier des broches de connexion (46), pour la connexion correcte des broches de connexion (46) avec le circuit électronique (36), à espacement angulaire de ces broches dissymétrique.

## Patentansprüche

1. Elektrisches Anschlußelement für einen Elektromotor, wobei dieser Motor einen Anker (12), der mit einem Beschlag (16) versehen ist, der leitende Spulen trägt, und eine elektronische Schaltung (36) zur elektrischen Versorgung und Umschaltung der Spulen umfaßt, dadurch gekennzeichnet, daß es einen leitenden Ring (42) umfaßt, bestehend aus einer ersten Seite, die mit mindestens zwei Axialstiften (44) zur Befestigung des Beschlags versehen ist, und einer zweiten Seite, die mit mindestens zwei axialen leitenden Spindeln (46) für die Verbindung mit der elektronischen Schaltung versehen ist, und mindestens zwei leitenden Umfangshaken (48) für die Verbindung der Spulen mit dem Ring (42), wobei der leitende Ring (42) in elektrisch isolierte Sektoren getrennt werden kann.

2. Elektrisches Anschlußelement nach Anspruch 1, dadurch gekennzeichnet, daß die Befestigungsstifte (44), die Spindeln (46) und die Verbindungshaken (48) mit dem Ring (42) aus einem Stück sind.

3. Elektrisches Anschlußelement nach Anspruch 1, dadurch gekennzeichnet, daß die Verbindungshaken (48) von gekrümmten eingeschnittenen Laschen gebildet werden, die in den Befestigungsstiften (44) vorgesehen sind.

4. Elektrisches Anschlußelement nach einem der vorhergehenden Ansprüche, dadurch gekennzeichnet, daß es Unverwechselbarkeitsmittel mit komplementärer Axialaussparung (56) und -vorsprung (58) für die richtige Winkelpositionierung der Befestigungsstifte (44) in bezug auf den Beschlag (16) umfaßt.

5. Elektrisches Anschlußelement nach einem der vorhergehenden Ansprüche, dadurch gekennzeichnet, daß es Unverwechselbarkeitsmittel durch einen unregelmäßigen Winkelabstand der Verbindungsspindeln (46) für die richtige Verbindung der Spindeln mit der elektronischen Schaltung (36) umfaßt.

6. Elektrisches Anschlußelement nach einem der vorhergehenden Ansprüche, dadurch gekennzeichnet, daß der Ring (42) vorzugsweise axial verdünnte Bereiche zur Abtrennung dieses Ringes umfaßt.

7. Elektromotor, bestehend aus einem festen Anker (12), der mit einem Beschlag (16) allgemeiner zylindrischer Form, der leitende Spulen trägt, versehen ist, und einer Stütze (34), die eine elektronische Schaltung (36) zur Versorgung und Umschaltung der Spulen trägt, dadurch gekennzeichnet, daß er mit einem elektrischen Anschlußelement (40) allgemeiner zylindrischer Form koaxial zu dem Beschlag (16) versehen ist, das einen leitenden Ring (42) umfaßt, der eine erste Seite, die mit mindestens zwei axialen Stiften (44) zur Befestigung auf dem Beschlag (16), die in komplementäre Löcher (50) einsteckbar sind, die in diesem Beschlag vorgesehen sind, eine zweite Seite, die mit mindestens zwei leitenden axialen Spindeln (46) zur Verbindung mit der elektronischen Schaltung (36) versehen ist, die in Bohrungen (54) einsteckbar sind, die durch die Stütze (34) der Schaltung hindurchgehen, und mindestens zwei leitende Umfangshaken (48) zur Verbindung der Spulen mit dem Ring (42) aufweist, wobei dieser Ring in elektrisch isolierte Sektoren getrennt ist.

8. Elektromotor nach Anspruch 7, dadurch gekennzeichnet, daß die Befestigungsstifte (44), die Spindeln (46) und die Verbindungshaken (48) mit dem Ring (42) aus einem Stück sind, wobei die Haken (48) von eingeschnittenen gekrümmten Laschen gebildet werden, die in den Befestigungsstiften (44) vorgesehen sind.

9. Elektromotor nach Anspruch 7 oder 8, dadurch gekennzeichnet, daß die Befestigungslöcher (50) für die Stifte (44) in einer elektrisch isolierenden Seitenwand (24), die eine Seite des Beschlags (16) bedeckt, vorgesehen sind.

10. Elektromotor nach einem der Ansprüche 7 bis 9, dadurch gekennzeichnet, daß der Motor Unverwechselbarkeitsmittel mit komplementärer Axialaussparung (56) und -vorsprung (58) für die richtige Winkelpositionierung der Befestigungsstifte (44) in bezug auf den Beschlag (16) umfaßt.

11. Elektromotor nach den Ansprüchen 9 und 10 gemeinsam, dadurch gekennzeichnet, daß die Axialaussparung (56) und der Axialvorsprung (58) in dem Ring (42) und der Isolierwand (24) vorgesehen sind.

12. Elektromotor nach einem der Ansprüche 7 bis 11, dadurch gekennzeichnet, daß der Motor Unverwechselbarkeitsmittel durch einen unregelmäßigen Winkelabstand der Verbindungsspindeln (46) für die richtige Verbindung der Verbindungsspindeln (46) mit der elektronischen Schaltung (36) mit einem asymmetrischen Winkelabstand dieser Spindeln umfaßt.

## Claims

1. Electrical connection element for an electric motor, this motor comprising a rotor (12) equipped with an armature (16) bearing conductive coils, and an electronic circuit (36) for electrical power supply and switching of the coils, characterised in that it comprises a conductive ring (42) having a first face equipped with at least two axial clips (44) for securing the armature, a second face equipped with at least two axial conductive pins (46) for connection to the electronic circuit, and at least two peripheral conductive hooks (48) for connecting the coils to the ring (42), the conductive ring (42) being capable of being divided into electrically insulated sectors.

2. Electrical connection element as claimed in Claim 1, characterised in that the securing clips (44), the pins (46) and the connecting hooks (48) are produced integrally with the ring (42).

3. Electrical connection element as claimed in Claim 1, characterised in that the connecting hooks (48) are formed by tabs bent back from slits provided in the securing clips (44).

4. Electrical connection element as claimed in any one of the preceding claims, characterised in that it comprises complementary axial locating means with a recess (56) and a projection (58) for the correct angular positioning of the securing clips (44) with respect to the armature (16).

5. Electrical connection element as claimed in any one of the preceding claims, characterised in that it comprises locating means using irregular angular spacing of the connecting pins (46) for the correct connection of these pins to the electronic circuit (36).

6. Electrical connection element as claimed in any one of the preceding claims, characterised in that the ring (42) has zones which are thinned-down, preferably axially, for dividing this ring into sectors.

7. Electric motor of the type comprising a fixed rotor (12) equipped with an armature (16) of generally cylindrical shape bearing conductive coils, and a support (34) bearing an electronic circuit (36) for power supply and switching of the coils, characterised in that it is equipped with an electrical connection element (40), of generally cylindrical shape, which is coaxial with the armature (16) and comprises a conductive ring (42) having a first face equipped with at least two axial clips (44) for securing on the armature (16) which can be fitted into complementary holes (50) provided in this armature, a second face equipped with at least two axial conductive pins (46) for connection to the electronic circuit (36) which can be fitted into holes (54) bored through the support (34) of the circuit, and at least two peripheral conductive hooks (48) for connecting the coils to the ring (42), this ring being divided into electrically insulated sectors.

8. Electric motor as claimed in Claim 7, characterised in that the securing clips (44), the pins (46) and the connecting hooks (48) are produced integrally with the ring (42), the hooks (48) being formed by tabs bent back from slits provided in the securing clips (44).

9. Electric motor as claimed in Claim 7 or 8, characterised in that the holes (50) for securing the clips (44) are produced in an electrically insulating side wall covering one face of the armature (16).

10. Electric motor as claimed in any one of Claims 7 to 9, characterised in that it comprises complementary axial locating means with a recess (56) and a projection (58) for the correct angular positioning of the securing clips (44) with respect to the armature (16).

11. Electric motor as claimed in Claims 9 and 10 taken together, characterised in that the axial recess (56) and projection (58) are provided in the ring (42) and the insulating side wall (24).

12. Electric motor as claimed in any one of Claims 7 to 11, characterised in that it comprises locating means using irregular angular spacing of the connecting pins (46) for the correct connection of the connecting pins (46) to the electronic circuit (36), with asymmetric angular spacing of these pins.
